# EUROPEAN PATENT SPECIFICATION

(11) **EP 2 724 611 B1**
(45) Date of publication and mention of the grant of the patent: **26.08.2020**
(21) Application number: 13397530.0
(22) Date of filing: 04.09.2013
(51) Int. Cl.: A01G 23/083, F16H 61/4043

(54) **Control circuit for a harvester head**
Steuerschaltung für einen Harvesterkopf
Circuit de commande pour un tête d'abattage-ébranchage

(30) Priority: 29.10.2012 FI 20126121
(43) Date of publication of application: 30.04.2014
(73) Proprietor: Waratah OM OY, 80100 Joensuu (FI)
(72) Inventor: Alfthan, Arto, 37770 Sääksmäki (FI)
(74) Representative: Berggren Oy, Tampere

(56) References cited:
- WO-A1-99/41972
- DE-A1-102006 052 050
- US-A- 3 788 075

## Description

### Field of the invention

The solution to be presented relates to a harvester head comprising a feeding device and a control circuit. The solution to be presented further relates to a method for controlling a harvester head comprising a feeding device and a control circuit

### Background of the invention

For the processing of tree trunks, an apparatus is used, for example a harvester head, or an apparatus for the delimbing and cross-cutting of tree trunks, for the purpose of gripping an upright growing tree, cutting the tree and felling it, after which the tree trunk is delimbed and cross-cut into pieces of fixed length by means of said apparatus.

The harvester head is normally connected to the end of the crane of a forest working machine, for example a harvester. The harvester head is connected to the crane by means of a joint, and it comprises the necessary actuators, normally hydraulic cylinders and hydraulic motors, for controlling the position of the harvester head and its different functions. The harvester head comprises a frame structure and a delimbing device movable with respect to the frame structure, for cutting off the branches. The tree trunk is delimbed simultaneously when the trunk is being supported and fed forward through the harvester head by means of a feeding device. The trunk is held and, if necessary, also pressed against the frame structure by means of, for example, two delimbing blades of the delimbing device which are placed against the trunk and delimb it. The feeding device is also movable with respect to the frame structure and is pressed against the trunk. The feeding device comprises, for example, two feed wheels, feed rollers, or endless tracks used as feeding members and placed against the trunk, pulling the trunk through the harvester head. The feeding device may comprise, for example, a wheel made of rubber or a rotary structure made of metal. The harvester head also comprises a cross-cutting device, for example a chain saw, for cross-cutting the tree trunk.

Harvester heads and apparatuses are also known which do not fell trees but are suitable for the processing of felled trunks and feed and delimb the trunk and normally also cross-cut it into pieces of fixed length. Apparatuses are also known which do not cross-cut the trunk and/or delimb the trunk.

The feeding device of the harvester head comprises, for example, 2 to 4 feed wheels or corresponding feeding members. Each feeding member is normally rotated by means of a hydraulic motor. The two hydraulic motors which rotate the feeding members are normally connected in parallel by means of a pressure medium circuit, but in addition to these, one or more hydraulic motors may be provided, connected in series with another hydraulic motor. If necessary, a mechanical parallel connection of the hydraulic motors is also used, to prevent a difference in the rotational speeds of the motors and to avoid, for example, slippage of the feeding device against the trunk.

A harvester head with two feed rollers is disclosed in publication WO 00/15025. In document WO 99/41972, the number of feed rollers totals three, one of them being rotated by two hydraulic motors whose rotational speeds are tied together, because they are mechanically connected by means of a shaft. In Fl 97340 B, four feed rollers are provided, rotated by four hydraulic motors in such a way that the rotational speeds of two hydraulic motors are tied together, because two feed rollers are mechanically connected to each other. A dual-capacity motor can also be used as the hydraulic motor, wherein different rotational speeds are generated, for example according to US 7644580 B2.

In an example, the hydraulic motor of the feeding device is a radial piston motor which normally has a fixed displacement and whose rotational speed is dependent on the volume flow of pressure medium supplied to the hydraulic motor. An example of a radial piston motor is presented in WO 99/24711.

It has been found that mechanical damage relating to the function of the hydraulic motor, particularly the radial piston motor, may occur in the hydraulic motor of the feeding device of the harvester head. The radial piston motor comprises several radially extending cylinders. Each cylinder comprises a piston which moves back and forth and whose movement is controlled by means of an annular structure which is called a cam ring. The inner edge of the structure has a wavy shape which is followed by a member connected to the piston, for example a cam wheel, generating the movement of the piston. In the radial piston motor, either the cam ring or the structure formed by the pistons and the cylinders pivots around the centre of the cam ring. Inside the cylinder, the piston has a reciprocating movement which sucks pressure medium into the cylinder and discharges pressure medium from the cylinder in an alternating manner.

US3788075 A discloses a solution preventing cavitation in hydraulic motors. A solution according to the preambles of claim 1 and 10 is shown in WO 99/41972.

### Brief summary of the invention

By means of the presented solution, it is possible to avoid the above-presented problems of prior art, and moreover, to avoid or reduce the effects of cavitation on the operation of a harvester head for the processing of tree trunks and feeding devices of the harvester head, actuators for controlling them, as well as the operation of the actuators.

The harvester head according to the solution is presented in claim 1. The method for controlling a harvester head according to the solution is presented in claim 10.

The control circuit including two pairs of motors configured to drive the feeding device which, in turn, is configured to feed a tree trunk through the harvesting head. The control circuit comprises a first valve assembly which is configured to control the rotation of the motors by means of pressurized pressure medium. The control circuit also comprises a second valve assembly configured to feed or supply pressure medium to the motors, wherein it is possible to maintain a predetermined pressure level of the pressure medium in the motors, or pressure medium is available for the motors.

The presented solution is useful in e.g. radial piston motors. By means of the presented solution, a situation is avoided, in which the pressure prevailing in the cylinder of the motor is lower than the pressure prevailing inside the motor. In said situation, the piston cannot return the cam wheel towards the cam ring. When the pressure prevailing in the cylinder then returns to a level higher than the pressure prevailing inside the motor, the cam wheel returns against the cam ring, causing an impact which may damage the cam ring.

The above described situation is possible particularly in hydraulic motors of the feeding device when a tree trunk forces a stopped motor to rotate because the trunk is moved by gravity, or when a running rotating motor stops for any reason, for example because of jamming or when a trunk or its branches prevent the rotation of the feed wheel and simultaneously its motor.

The presented solution removes and reduces the effects of cavitation and impediments particularly in the motors of the control circuit. The motors are, for example, of the radial piston motor type, but in addition to piston type motors, problems caused by cavitation can also be avoided by the presented solution in other types of motors, for example in gerotor motors and components related to them. Examples include vane motors and axial piston motors.

With the presented harvester head, processing of tree trunks is performed by means of the feeding device. In some examples, the harvester head is also used for performing one or more of the following functions: cross-cutting and felling of the trunk, cross-cutting of the trunk to e.g. pieces of fixed length, delimbing, and debarking of the trunk.

According to an option of the solution, the second valve assembly is configured to supply pressurized pressure medium to the motors at least when the motors have been stopped by means of the first valve assembly.

With the solution, advantages are achieved in a situation, in which feeding is not under way. A tree trunk in the harvester head may force a stopped motor to rotate because the trunk is moved by gravity. Thus, if no pressure medium can gain entry to the motor, for example the piston assembly of the radial piston motor cannot move. If the presented solution is not applied, the piston assembly may forcefully impact upon and come back into contact with the cam ring assembly when the motor is started. The presented solution is useful irrespective of whether the tree trunk moves forward or backward in the harvester head, or of the direction of rotation of the motor.

In an example, the second valve assembly feeds pressurized pressure medium onto both sides of a motor.

According to another option of the solution, the second valve assembly conveys pressure medium to the motors at least when the motors have been started by means of the first valve assembly.

With the solution, advantages are achieved in a situation, in which feeding is under way. Thus, if no pressure medium can gain entry to the motor rotating in the harvester head, for example the piston assembly of the radial piston motor cannot move in a desired way. If the presented solution is not applied, the piston assembly may forcefully impact upon and come back into contact with the cam ring assembly. In particular, the presented solution is useful in a situation in which a rotating motor is forced to rotate because of a mechanical connection, or the rotating motor is not supplied with pressure medium from another motor coupled in series. Such is the case, for example, in a situation where a tree trunk is moving backwards in the harvester head.

Supplying the pressure medium is, for example, passive, wherein the pressure medium is not obtained from a pressure line but elsewhere from the control circuit of the motors of the feeding device.

According to the invention first and second motor and third and fourth motor are coupled in parallel. In an example, second and fourth motor are coupled mechanically together, wherein the rotational speeds of the motors coupled mechanically together are tied together.

The mechanical connection is implemented, for example, by means of a shaft that connects the hydraulic motors, but in an alternative implementation, the feeding members can also be coupled together, for example by means of teeth.

According to an example of the presented solution, the first valve assembly prevents and allows the entry of pressurized pressure medium into the second valve assembly.

According to a second example of the presented solution, the second valve assembly comprises a non-return valve which allows the entry of pressure medium from the second valve assembly to the first motor and prevents the return of pressure medium from the first motor to the second valve assembly.

According to a third example of the presented solution, the second valve assembly is configured to set the pressure level of the pressurized medium to a predetermined level. Said predetermined level is, for example, 10 to 30 bar, and it can be found by, for example, pilot tests, measurements, or experiments.

The functions corresponding to the first and the second valve assemblies can be implemented by various valve types, and the valve assembly can comprise or one or more separate valves and their lines. Alternatives include a directional valve, a pilot-operated shut-off valve, and a directional proportional valve, as well as poppet and slide valves.

The first valve assembly is set in the desired state, for example, by controlling electronically or by means of a pressure medium and by pilot control. Electronic control is implemented, for example, by one or more control current signals and by controlling one or more magnetic or solenoid valves.

In an example, the first motor, or any other motor, is a radial piston motor. Said radial piston motor comprises at least one cylinder, a piston assembly configured to move back and forth in said cylinder, and a cam ring assembly, with which the piston assembly is in contact and which controls the movement of the piston assembly when the piston assembly is moving along the cam ring assembly. The second valve assembly is configured to feed or convey pressure medium to the radial piston motor, wherein it is possible to maintain a predetermined pressure level of the pressure medium in the cylinder of the radial piston motor, or there is pressure medium available for the cylinder, to maintain the contact between the cam ring assembly and the piston assembly.

### Description of the drawings

Figure 1 shows a forest machine, particularly a harvester movable on a terrain; the presented solution provides a harvester head, that can be mounted on the forest machine.
Figure 2 shows an apparatus, particularly a harvester head, which applies the presented solution in the control of the feeding device.
Figure 3 shows a first embodiment of the presented solution, and an example of the same, with a control circuit for controlling the feeding device.
Figure 4 shows an example that does not constitute the present invention, with a control circuit for controlling a feeding device.
Figure 5 shows a second embodiment of the presented solution, and an example of the same, with a control circuit for controlling the feeding device.
Figure 6 shows a third embodiment of the presented solution, and an example of the same, with a control circuit for controlling the feeding device.
Figure 7 shows a cross-sectional view of a radial piston motor according to an example, applied in the solution.

### Detailed description of the invention

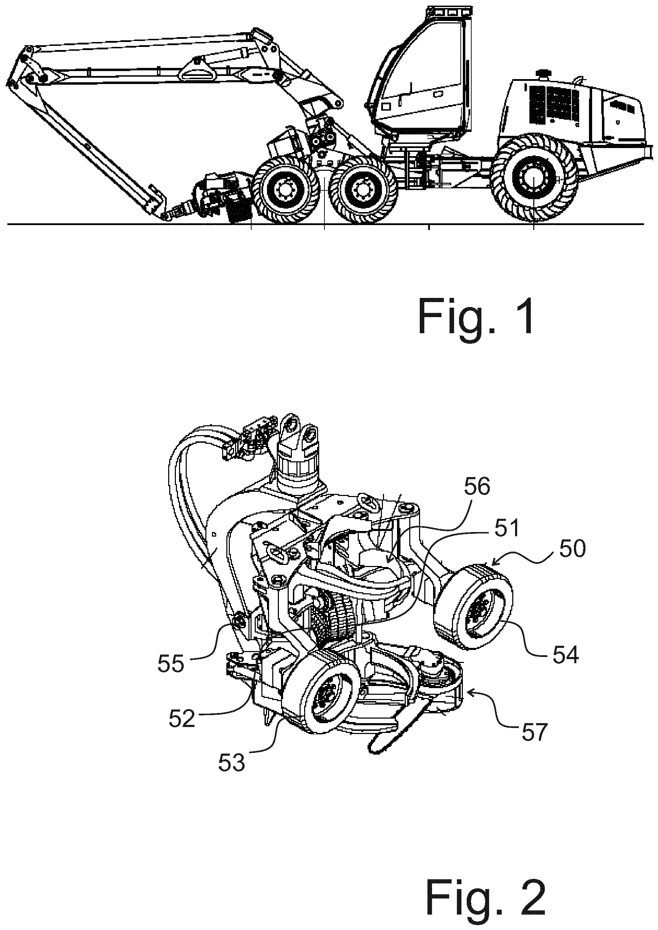

Figure 1 shows a forest machine of the type of a harvester movable on a terrain. The forest machine comprises a crane; an apparatus, for example a harvester head, which applies the presented solution can be mounted at the end of the crane.

Figure 2 shows in more detail an apparatus, for example a harvester head, which applies the presented solution and is capable of performing cross-cutting and felling of a tree, feeding and delimbing of the tree trunk, as well as cross-cutting of the trunk to pieces of fixed length.

The apparatus of Fig. 2 comprises a frame structure 55 which can be swivelled into different positions: the vertical position, as shown in Fig. 2, and the horizontal position; as well as a delimbing device 56, a feeding device 50, and a cross-cutting device 57.

The delimbing device comprises at least two delimbing blades, normally placed in parallel and on opposite sides of the tree trunk. The feeding device comprises at least two feeding members, normally placed in parallel and on opposite sides of the tree trunk. In the example of Fig. 2, the feeding device 50 comprises four feeding members which comprise two feed wheels 53, 54 and two feed rollers 51, 52 placed in the frame structure 55 and mechanically connected to each other.

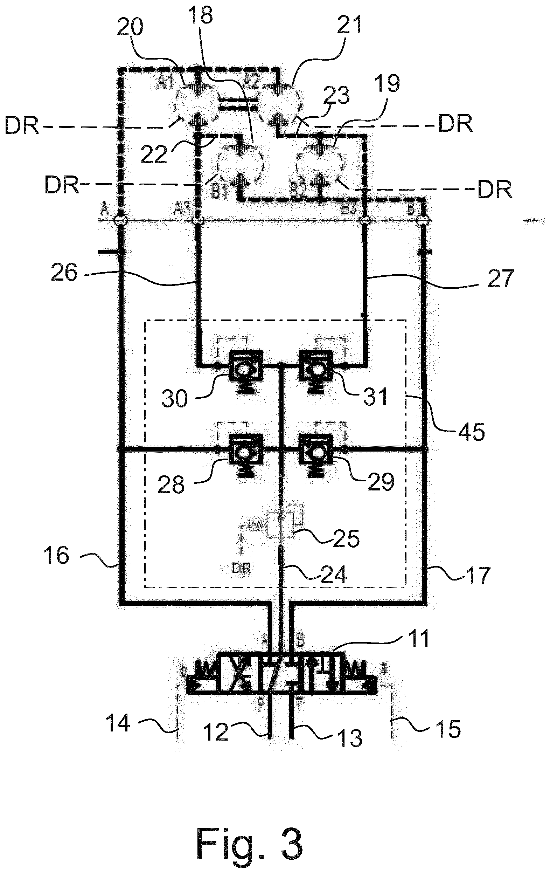

Figure 3 shows a solution for the control circuit of the hydraulic motors 18 to 21 of the feeding device, for rotating the feeding members of the apparatus. In this example, each hydraulic motor 18 to 21 rotates a feeding member, and two hydraulic motors 20, 21 are mechanically connected together. The control circuit of Fig. 3 is suitable for controlling the harvester head of Fig. 2.

The motors 20, 21 are coupled in parallel and connected to a line 16, via which pressure medium enters or exits the motors, and from which the pressure medium is distributed to the motors 20, 21. The motors 18 and 20 are coupled in series and connected by a line 22, via which pressure medium is transferred from one motor to the other. The motors 19 and 21 are coupled in series and connected by a line 23, via which pressure medium is transferred from one motor to the other. The motors 18, 19 are coupled in parallel and connected to a line 17, via which the pressure medium exits the motors, or enters them, and in which the pressure medium is joined.

One or more of the motors is equipped with at least a first connection, to which the line 16 or 17 is coupled, and a second connection, to which the line 22 or 23 is coupled, and also a drain connection DR, if necessary. The pressure medium accumulated inside the motor exits the motor via the drain connection. In an example, one or more of the motors are radial piston motors, and pressure medium is thus accumulated in a space in the motor where also the cam ring and the cam wheel are placed.

The direction of rotation of the motors 18 to 21 is controlled by means of a valve assembly 11 as well as lines between said valve assembly 11 and the motor. The valve assembly 11 couples the pressure connection 12 either to the line 16 or the line 17, depending on the desired direction of rotation, and simultaneously the valve assembly 11 couples the return connection 13 to either the line 16 or the line 17. Pressure medium is supplied from the pressure line 12 into one of the lines 16 and 17, and simultaneously pressure medium is supplied from one of the lines 16 and 17 to the return line 13. A desired working pressure prevails in the pressure line, and in the return line, the pressure is normally as low as possible, for example the tank pressure.

In an example, the valve assembly 11 is implemented with a five-port three-position directional valve which is centralized and pilot controlled (a 5/3 slide valve).

In the first state of the valve assembly 11, the line 17 is connected to a pressure line 12, the line 16 is connected to the return line 13, and the line 24 is closed. In the second state of the valve assembly 11, the line 16 is connected to the pressure line 12, the line 17 is connected to the return line 13, and the line 24 is closed. In the third state of the valve assembly 11, the line 16, the line 17 and the return line 13 are closed, and the line 24 is connected to the pressure line 12. The first and the second states control the motors 18 to 21 to rotate, and the third state keeps the motors 18 to 21 stopped, because the volume flow is prevented in the lines 16 and 17.

Alternatively, the line 24 can be closed and connected to the pressure line 12 by using a separate valve assembly or a valve, for example a 2/2 valve which is a non-return valve.

The state of the valve assembly 11 is selected by setting the valve assembly 11 into a desired state, for example, by controlling electronically or by means of a pressure medium, as in Fig. 3 which shows pilot lines 14, 15. Pressurized pressure medium supplied to the pilot line 14 will set the valve assembly 11 into the first state. Pressurized pressure medium supplied to the pilot line 15 will set the valve assembly 11 into the second state. Furthermore, in the example of Fig. 3, the valve assembly 11 will set into the third state by itself when no pressurized pressure medium is supplied to the pilot valves 14, 15, or the pressure in both of them is lower than a predetermined value, or there is no pressure in them.

The presented solution relates particularly to the valve assembly 45 which is configured either to supply or to convey pressure medium to the first connection or to the second connection, or both, of one or more motors 18 to 21. Instead of the connection of the motor, it is possible to use the line coupled to the first or second connection of the motor.

By means of the presented solution, a situation is avoided, in which the pressure prevailing in the cylinder of the motor is lower than the pressure prevailing inside the motor, that is, the pressure in the pressure connection DR.

In an example shown in Fig. 3, the valve assembly 45 is configured to actively supply pressure medium to the first or second connection of one or more motors 18 to 21. According to the example of Fig. 3, the valve assembly 45 supplies pressure medium via the line 16 to the motor 20. The valve assembly 45 is connected to the pressure line 12 or to another corresponding pressure line supplying pressurized pressure medium. The valve assembly 45 is configured to supply pressure medium to the motor particularly and at least when the connections of said motor to the pressure line 12 and the return line 13 are closed.

It is possible that the valve assembly 11 actively supplies pressure medium to the motor 21 via the line 16 or the line 22 (by using *e.g.* the line 26), or preferably both of them. Alternatively, it is possible that the valve assembly 11 actively supplies pressure medium to the motor 18 via the line 17 or the line 22, or preferably both of them. Alternatively, it is possible that the valve assembly 11 actively supplies pressure medium to the motor 19 via the line 17 or the line 23 (by using *e.g.* the line 27), or preferably both of them.

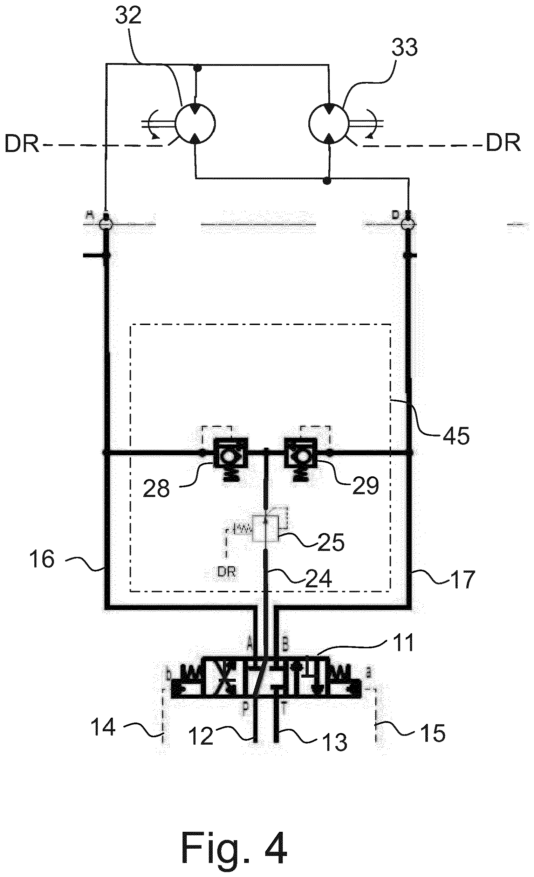

In another example which is shown in Fig. 4 that does not constitute the present invention and which only comprises two parallel motors 32, 33, the valve assembly 45 is configured to actively supply pressure medium to the first or second connection of one or more motors 32, 33.

According to the example of Fig. 4, it is possible that the valve assembly 11 actively supplies pressure medium to the motor 32 via the line 16 or the line 17, or preferably both of them. Alternatively, it is possible that the valve assembly 11 actively supplies pressure medium to the motor 33 via the line 17 or the line 16, or preferably both of them.

Preferably, in the control circuits of the feeding device comprising 2 to 4 motors, pressure medium is supplied by the valve assembly 45 onto both sides of each motor, that is, their first and second connections.

In an example, the valve assembly 45 comprises a pressure relief valve 25 which is configured to reduce the pressure of pressure medium entering the valve assembly 45 from the pressure line, to a predetermined level which is *e.g.* 10 to 30 bar. Pressure medium whose pressure is on the predetermined level is actively supplied to one or more motors. In the examples of Figs. 3 and 4, active supply only takes place when the connections of the motor to both the pressure line and the return line are closed.

The pressure medium is supplied to the motor via one or more non-return valves 28 to 31 of the valve assembly 45, which prevents the return of the pressure medium to the valve assembly 45 from either the motor or the line, via which the pressure medium is conveyed from the valve assembly 45 to the motor. Preferably, one or more non-return valves 28 to 31 are controlled non-return valves, preventing the return of pressure medium to the valve assembly 45 either from the motor or the line via which the pressure medium is conveyed from the valve assembly 45 to the motor. The pressure medium will return if its pressure is on the level determined by the controlled non-return valve. Moreover, the valve assembly 45 is preferably configured to convey the returning pressure medium to another motor or line than the one from which the pressure medium was returned.

In the example shown in Fig. 4, the same reference numerals are marked for the components which can be the same as in the example of Fig. 3. Furthermore, it is possible that the motors 32, 33 of Fig. 4 correspond to the motors 18, 19 of Fig. 3, with respect to their structure, placement and connections. The solution shown in Fig. 4 for the control circuit of the hydraulic motors 32, 33 of the feeding device can be applied in an apparatus according to Fig. 2 but without the feeding members 51, 52 or applying the control circuit for controlling the feeding members 53, 54 only.

In the example of Fig. 4, the valve assembly comprises, for example, not more than two non-return valves 28, 29 or controlled non-return valves, and one pressure relief valve 25.

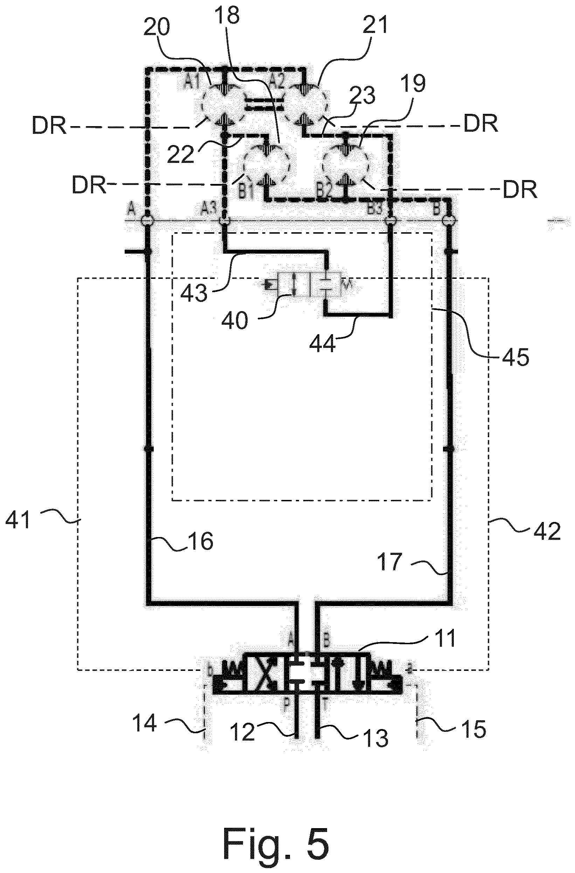

We shall next look at a third example of the presented solution with reference to Fig. 5.

As shown in Fig. 5, the valve assembly 45 is configured to passively convey pressure medium in the control circuit to the space between one or more pairs of motors (for example via a line 43 or a line 44), when the motors of said pair of motors are connected in series. It is thus possible to utilize a line connecting said motors, such as the line 22 or 23, to which pressure medium is conveyed.

Preferably, pressure medium is conveyed to the space between a pair of motors from a space between another pair of motors. It is thus possible to utilize a line connecting said motors, such as the line 22 or 23, from which the pressure medium is taken (for example, via the line 43 or the line 44).

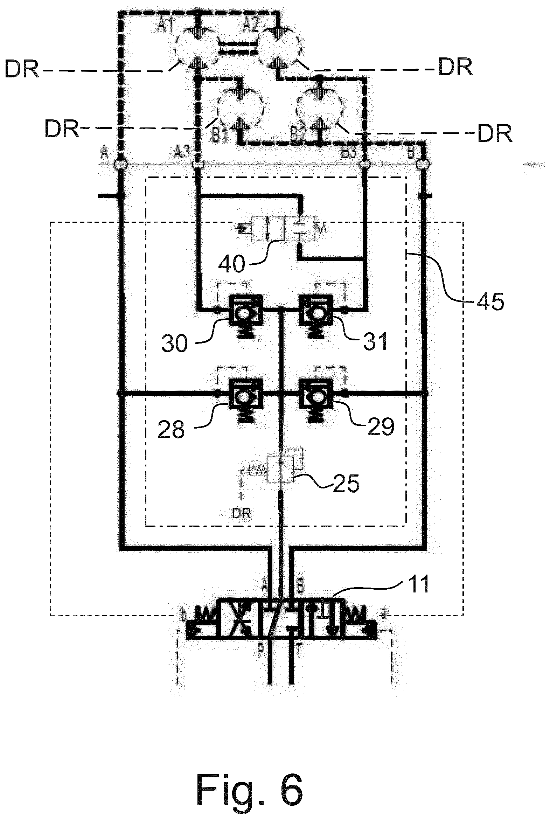

Preferably, the valve assembly 45 is in use in a situation in which the control circuit of the feeding device comprises two pairs of motors (each comprising two motors in series) coupled in parallel, and one motor of each pair being mechanically connected with one motor of the other pair. Figures 5 and 6 show said situation in which the motors 18 and 20 form the first pair, and the motors 19 and 21 form the second pair.

Preferably, the valve assembly 45 is also in use and open particularly in a situation in which pressure medium flows from a motor having no mechanical connection to a motor having a mechanical connection. In the example of Fig. 5, the valve assembly 45 is open only when the pressure medium flows in the above-described direction.

In the example shown in Fig. 5, the same reference numerals are marked for those components which could be the same as in the example of Fig. 3. The solution shown in Fig. 5 for the control circuit of the hydraulic motors 18 to 21 of the feeding device can be applied in the apparatus of Fig. 2, in which the control circuit is used for controlling the feeding members 51 to 54.

The state of the valve assembly 45 is selected by setting the valve assembly 45 in a desired state, for example by controlling electronically or by means of pressure medium. In the example of Fig. 5, the valve assembly 45 comprises *e.g.* a pilot-controlled 2/2 valve 40 which is normally closed and, when pilot controlled, opens a connection between the lines 22 and 23. For setting up the connection, the lines 43 and 44 are used, the valve assembly 45 either opening or closing the connection between them.

In the example of Fig. 5, the state of the valve assembly is selected by controlling by means of pressure medium, for which purpose the pilot lines 41, 42 are provided. Pressurized pressure medium guided into the pilot line 41 sets the valve assembly 45 in the open state. Pressurized pressure medium guided into the pilot line 42 sets the valve assembly 45 in the closed state.

Preferably, each pilot line 41, 42 is connected so that the valve assembly 45 is closed when the lines 16 and 17 are closed, and the valve assembly 45 is open when either the line 16 or the line 17 is connected to the pressure line 12. The pilot line 41 can be connected together with the pilot line 14, and the pilot line 42 can be connected together with the pilot line 15. The pilot line 42 is not necessary, if the valve assembly 45 is configured to close by itself, for example by means of a spring, when the pressure of the pressure medium is not effective in the pilot line 41.

In the example shown in Fig. 6, the same reference numerals are marked for those components which can be the same as in the example of Fig. 3 or Fig. 4. The solution shown in Fig. 6 for the control circuit of the hydraulic motors of the feeding device can be applied in the apparatus of Fig. 2, in which the control circuit is used for controlling the feeding members 51 to 54. The example shown in Fig. 6 is a combination of the examples shown in connection with Figs. 3 and 5. The valve assembly 45 can comprise the functions of both Fig. 3 and Fig. 5, and what has been presented of the present solution in connection with the different embodiments and examples of Figs. 3 and 5, also holds true for the example of Fig. 6, where applicable. Other combinations than those shown in Fig. 6 are possible as well.

According to the example of Fig. 6, the lines of the control circuit can also be combined to provide the desired functions with a simple structure, if necessary. For example, the line 26 of Fig. 3 and the line 43 of Fig. 5 are combined, and furthermore, the line 27 of Fig. 3 and the line 44 of Fig. 5 are combined.

Preferably, the functions shown in Figs. 3 and 4 and the functions shown in Fig. 5 are in use at different times. In other words, the functions of Fig. 3 relate to a mode where the motor is stopped and the valve assembly 11 is closed, and the functions of Fig. 5 relate to a mode where the motor is running and the valve assembly 11 is open.

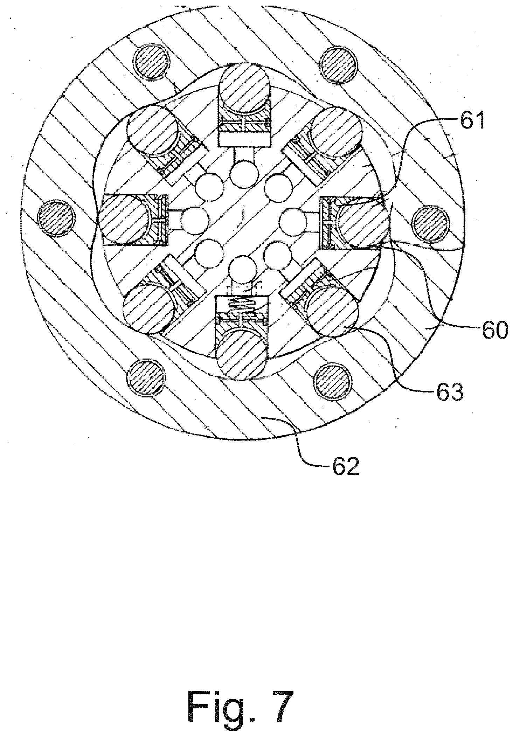

Figure 7 shows a cross section of a radial piston motor according to an example. The radial piston motor comprises several radially extending cylinders 60. Each cylinder comprises a piston assembly 61 which moves back and forth and whose movement is controlled by means of a ring-shaped cam ring assembly 62. The inner edge of the cam ring assembly 62 has a wavy shape which is followed by a member connected to the piston assembly 61, for example a cam wheel 63, generating the movement of the piston assembly. In this example, the piston assembly 61 pivots around the centre of the cam ring assembly 62. Inside the cylinder 60, the piston assembly 61 has a reciprocating movement which sucks pressure medium into the cylinder and discharges pressure medium from the cylinder in an alternating manner. The piston assembly 61 is in contact with the cam ring assembly 62 which controls the movement of the piston assembly 61 when the piston assembly 61 moves along the cam ring assembly 62. The valve assembly 45 supplies or conveys pressure medium to the cylinder 60.

The above-presented examples do not limit the application of the presented solution to the presented examples only, but it can be applied within the scope defined by the presented claims.

## Claims

1. A harvester head comprising a feeding device and a control circuit, the control circuit comprising:
- a first motor and a second motor (18, 20) which are configured to drive the feeding device (50) which is configured to feed a tree trunk through the harvester head, wherein the second motor is coupled in series with the first motor;
- a third motor and a fourth motor (19, 21) which are configured to drive the feeding device, wherein the fourth motor is coupled in series with the third motor, and wherein the third and fourth motors are coupled in parallel with the first and second motors (18, 20);
- a first valve assembly (11) which is configured to control the rotation of the motors (18, 19, 20, 21) by means of pressurized pressure medium, wherein the first valve assembly (11) is further configured to supply pressurized pressure medium to the motors and to receive pressure medium from the motors, and wherein the first valve assembly (11) is also configured to start and stop the rotation of the motors and to change the direction of rotation of the motors; and
- a second valve assembly (45);
**characterized in that** the second valve assembly (45) is configured to
- either (i), when the motors have been stopped by means of the first valve assembly (11), supply pressurized pressure medium to a space between the first motor and the second motor from a line (24) that is connected to a pressure line (12) supplying pressurized pressure medium;
- or (ii), when the motors have been started by means of the first valve assembly (11), convey pressure medium to a space between the first motor and the second motor from a space between the third motor and the fourth motor;
- or (iii) operate according to both options (i) and (ii).

2. The harvester head according to claim 1, wherein in the option (i) the second valve assembly (45) is further configured to supply the pressurized pressure medium onto both sides of the first motor.

3. The harvester head according to claim 1 or 2, wherein the second motor (20) is coupled mechanically together with the fourth motor (21), whereby the rotating speeds of the second motor and the fourth motor coupled mechanically together are tied together.

4. The harvester head according to any one of claims 1 to 3, wherein the first valve assembly (11) is configured to prevent and allow the entry of pressurized pressure medium into the second valve assembly (45).

5. The harvester head according to any one of claims 1 to 4, wherein in the option (i) the second valve assembly (45) comprises a non-return valve (28-31) which is configured to allow the entry of pressure medium from the second valve assembly (45) to the first motor and to prevent the return of the pressure medium from the first motor to the second valve assembly (45).

6. The harvester head according to any one of claims 1 to 5, wherein in the option (i) the second valve assembly (45) is configured to set the pressure of the pressurized medium to a predetermined level.

7. The harvester head according to any one of claims 1 to 6, wherein each motor is a radial piston motor which comprises:
- at least one cylinder (60);
- a piston assembly (61) configured to move back and forth in said cylinder; and
- a cam ring assembly (62) which the piston assembly is in contact with and which controls the movement of the piston assembly when the piston assembly moves along the cam ring assembly;
- wherein the second valve assembly (45) is configured to supply or convey pressure medium to the radial piston motor.

8. The harvester head according to any one of claims 1 to 7, wherein
- the first and second motors (18, 20) are connected by a first line (22), via which pressure medium is transferred from one motor to the other, and
- the pressure medium conveyed to the space between the first and second motors (18, 20) is conveyed to the first line (22).

9. The harvester head according to any one of claims 1 to 8, wherein
- the third and fourth motors (19, 21) are connected by a second line (23), via which pressure medium is transferred from one motor to the other, and
- the pressure medium taken from the space between the third and fourth motors (19, 21) is taken from the second line (23).

10. A method for controlling a harvester head comprising a feeding device and a control circuit, the control circuit comprising:
- a first motor and a second motor (18, 20) which are configured to drive the feeding device (50) which is configured to feed a tree trunk through the harvester head, wherein the second motor is coupled in series with the first motor;
- a third motor and a fourth motor (19, 21) which are configured to drive the feeding device, wherein the fourth motor is coupled in series with the third motor, and wherein the third and fourth motors are coupled in parallel with the first and second motors (18, 20);
- a first valve assembly (11) which is configured to control the rotation of the motors (18, 19, 20, 21) by means of pressurized pressure medium, wherein the first valve assembly (11) is further configured to supply pressurized pressure medium to the motors and to receive pressure medium from the motors, and wherein the first valve assembly (11) is also configured to start and stop the rotation of the motors and to change the direction of rotation of the motors; and
- a second valve assembly (45);
the method being **characterized by**
- either (i), when the motors have been stopped by means of the first valve assembly (11), supplying pressurized pressure medium to a space between the first motor and the second motor from a line (24) that is connected to a pressure line (12) supplying pressurized pressure medium;
- or (ii), when the motors have been started by means of the first valve assembly (11), conveying pressure medium to a space between the first motor and the second motor from a space between the third motor and the fourth motor;
- or (iii) operating according to both options (i) and (ii).

## Patentansprüche

1. Harvesterkopf, umfassend eine Zuführeinrichtung und eine Steuerschaltung, wobei die Steuerschaltung Folgendes umfasst:
- einen ersten Motor und einen zweiten Motor (18, 20), die dazu konfiguriert sind, die Zuführeinrichtung (50) anzutreiben, die dazu konfiguriert ist, einen Baumstamm durch den Harvesterkopf zu führen, wobei der zweite Motor mit dem ersten Motor in Reihe geschaltet ist;
- einen dritten Motor und einen vierten Motor (19, 21), die dazu konfiguriert sind, die Zuführeinrichtung anzutreiben, wobei der vierte Motor mit dem dritten Motor in Reihe geschaltet ist und wobei der dritte und der vierte Motor mit dem ersten und dem zweiten Motor (18, 20) parallel geschaltet sind;
- eine erste Ventilanordnung (11), die dazu konfiguriert ist, die Drehung der Motoren (18, 19, 20, 21) mit Hilfe von unter Druck stehendem Druckmedium zu steuern, wobei die erste Ventilanordnung (11) ferner dazu konfiguriert ist, den Motoren unter Druck stehendes Druckmedium zuzuführen und aus den Motoren Druckmedium zu empfangen, und wobei die erste Ventilanordnung (11) außerdem dazu konfiguriert ist, die Drehung der Motors zu starten und zu stoppen und die Drehrichtung der Motoren zu ändern; und
- eine zweite Ventilanordnung (45);
**dadurch gekennzeichnet, dass** die zweite Ventilanordnung (45) dazu konfiguriert ist,
- entweder (i), wenn die Motoren mit Hilfe der ersten Ventilanordnung (11) gestoppt wurden, einem Raum zwischen dem ersten Motor und dem zweite Motor unter Druck stehendes Druckmedium aus einer Leitung (24) zuzuführen, die mit einer Druckleitung (12) verbunden ist, die unter Druck stehendes Druckmedium zuführt;
- oder (ii), wenn die Motoren mit Hilfe der ersten Ventilanordnung (11) gestartet wurden, Druckmedium aus einem Raum zwischen dem dritten Motor und dem vierten Motor in einen Raum zwischen dem ersten Motor und dem zweiten Motor zu fördern;
- oder (iii) nach beiden Optionen (i) und (ii) zu arbeiten.

2. Harvesterkopf nach Anspruch 1, wobei bei der Option (i) die zweite Ventilanordnung (45) ferner dazu konfiguriert ist, das unter Druck stehende Druckmedium beiden Seiten des ersten Motors zuzuführen.

3. Harvesterkopf nach Anspruch 1 oder 2, wobei der zweite Motor (20) mechanisch mit dem vierten Motor (21) gekoppelt ist, wodurch die Drehzahlen des zweiten Motors und des vierten Motors, die mechanisch miteinander gekoppelt sind, aneinander gebunden sind.

4. Harvesterkopf nach einem der Ansprüche 1 bis 3, wobei die erste Ventilanordnung (11) dazu konfiguriert ist, den Eintritt von unter Druck stehendem Druckmedium in die zweite Ventilanordnung (45) zu verhindern und zuzulassen.

5. Harvesterkopf nach einem der Ansprüche 1 bis 4, wobei bei der Option (i) die zweite Ventilanordnung (45) ein Rückschlagventil (28 - 31) umfasst, das dazu konfiguriert ist, den Eintritt von Druckmedium aus der zweiten Ventilanordnung (45) in den ersten Motor zuzulassen und den Rückfluss des Druckmedium aus dem ersten Motor in die zweite Ventilanordnung (45) zu verhindern.

6. Harvesterkopf nach einem der Ansprüche 1 bis 5, wobei bei der Option (i) die zweite Ventilanordnung (45) dazu konfiguriert ist, den Druck des unter Druck stehenden Mediums auf ein vorbestimmtes Niveau einzustellen.

7. Harvesterkopf nach einem der Ansprüche 1 bis 6, wobei jeder Motor ein Radialkolbenmotor ist, der Folgendes umfasst:
- zumindest einen Zylinder (60);
- eine Kolbenanordnung (61), die dazu konfiguriert ist, sich im Zylinder vor und zurück zu bewegen; und
- eine Nockenringanordnung (62), mit der die Kolbenanordnung in Kontakt steht und die die Bewegung der Kolbenanordnung steuert, wenn sich die Kolbenanordnung entlang der Nockenringanordnung bewegt;
- wobei die zweite Ventilanordnung (45) dazu konfiguriert ist, Druckmedium dem Radialkolbenmotor zuzuführen bzw. zu diesem zu fördern.

8. Harvesterkopf nach einem der Ansprüche 1 bis 7, wobei
- der erste und der zweite Motor (18, 20) durch eine erste Leitung (22) verbunden sind, über die Druckmedium aus einem Motor in den anderen übertragen wird, und
- das in den Raum zwischen dem ersten und dem zweiten Motor (18, 20) geförderte Druckmedium in die erste Leitung (22) gefördert wird.

9. Harvesterkopf nach einem der Ansprüche 1 bis 8, wobei
- der dritte und der vierte Motor (19, 21) durch eine zweite Leitung (23) verbunden sind, über die Druckmedium aus einem Motor in den anderen übertragen wird, und
- das aus dem Raum zwischen dem dritten und dem vierten Motor (19, 21) entnommene Druckmedium aus der zweiten Leitung (23) entnommen wird.

10. Verfahren zum Steuern eines Harvesterkopfs, umfassend eine Zuführeinrichtung und eine Steuerschaltung, wobei die Steuerschaltung Folgendes umfasst:
- einen ersten Motor und einen zweiten Motor (18, 20), die dazu konfiguriert sind, die Zuführeinrichtung (50) anzutreiben, die dazu konfiguriert ist, einen Baumstamm durch den Harvesterkopf zu führen, wobei der zweite Motor mit dem ersten Motor in Reihe geschaltet ist;
- einen dritten Motor und einen vierten Motor (19, 21), die dazu konfiguriert sind, die Zuführeinrichtung anzutreiben, wobei der vierte Motor mit dem dritten Motor in Reihe geschaltet ist und wobei der dritte und der vierte Motor mit dem ersten und dem zweiten Motor (18, 20) parallel geschaltet sind;
- eine erste Ventilanordnung (11), die dazu konfiguriert ist, die Drehung der Motoren (18, 19, 20, 21) mit Hilfe von unter Druck stehendem Druckmedium zu steuern, wobei die erste Ventilanordnung (11) ferner dazu konfiguriert ist, den Motoren unter Druck stehendes Druckmedium zuzuführen und aus den Motoren Druckmedium zu empfangen, und wobei die erste Ventilanordnung (11) außerdem dazu konfiguriert ist, die Drehung der Motors zu starten und zu stoppen und die Drehrichtung der Motoren zu ändern; und
- eine zweite Ventilanordnung (45);
wobei das Verfahren **gekennzeichnet ist durch**
- entweder (i), wenn die Motoren mit Hilfe der ersten Ventilanordnung (11) gestoppt wurden, Zuführen von unter Druck stehendem Druckmedium aus einer Leitung (24), die mit einer Druckleitung (12) verbunden ist, die unter Druck stehendes Druckmedium zuführt, in einen Raum zwischen dem ersten Motor und dem zweiten Motor;
- oder (ii), wenn die Motoren mit Hilfe der ersten Ventilanordnung (11) gestartet wurden, Fördern von Druckmedium aus einem Raum zwischen dem dritten Motor und dem vierten Motor in einen Raum zwischen dem ersten Motor und dem zweiten Motor;
- oder (iii) Arbeiten sowohl nach Option (i) als auch nach Option (ii).

## Revendications

1. Tête d'abattage-ébranchage comprenant un dispositif d'alimentation et un circuit de commande, le circuit de commande comprenant :
un premier moteur et un deuxième moteur (18, 20) qui sont conçus pour entraîner le dispositif d'alimentation (50) qui est conçu pour faire passer un tronc d'arbre à travers la tête d'abattage-ébranchage, le deuxième moteur étant accouplé en série avec le premier moteur ;
un troisième moteur et un quatrième moteur (19, 21) qui sont conçus pour entraîner le dispositif d'alimentation, le quatrième moteur étant accouplé en série avec le troisième moteur, et les troisième et quatrième moteurs étant accouplés en parallèle avec les premier et deuxième moteurs (18, 20) ;
un premier ensemble de soupape (11) qui est conçu pour commander la rotation des moteurs (18, 19, 20, 21) au moyen d'un milieu de pression mis sous pression, le premier ensemble de soupape (11) étant en outre conçu pour fournir un milieu de pression mis sous pression aux moteurs et pour recevoir un milieu de pression des moteurs, et le premier ensemble de soupape (11) étant également conçu pour démarrer et arrêter la rotation des moteurs et pour changer le sens de rotation des moteurs ; et
un second ensemble de soupape (45) ;
**caractérisée en ce que** le second ensemble de soupape (45) est conçu pour
soit (i), lorsque les moteurs ont été arrêtés au moyen du premier ensemble de soupape (11), fournir un milieu de pression mis sous pression à un espace entre le premier moteur et le deuxième moteur à partir d'une conduite (24) qui est raccordée à une conduite sous pression (12) fournissant le milieu de pression mis sous pression ;
soit (ii), lorsque les moteurs ont été démarrés au moyen du premier ensemble de soupape (11), transporter le milieu de pression à un espace entre le premier moteur et le deuxième moteur depuis un espace entre le troisième moteur et le quatrième moteur ;
soit (iii) fonctionner selon les deux options (i) et (ii).

2. Tête d'abattage-ébranchage selon la revendication 1, dans l'option (i), le second ensemble de soupape (45) étant en outre conçu pour fournir le milieu de pression mis sous pression sur les deux côtés du premier moteur.

3. Tête d'abattage-ébranchage selon la revendication 1 ou 2, le deuxième moteur (20) étant accouplé mécaniquement avec le quatrième moteur (21), les vitesses de rotation du deuxième moteur et du quatrième moteur accouplés mécaniquement ensemble étant ainsi liées.

4. Tête d'abattage-ébranchage selon l'une quelconque des revendications 1 à 3, le premier ensemble de soupape (11) étant conçu pour empêcher et permettre l'entrée de milieu de pression mis sous pression dans le second ensemble de soupape (45).

5. Tête d'abattage-ébranchage selon l'une quelconque des revendications 1 à 4, dans l'option (i), le second ensemble de soupape (45) comprenant un clapet anti-retour (28-31) qui est conçu pour permettre l'entrée du milieu de pression mis sous pression du second ensemble de soupape (45) au premier moteur et pour empêcher le retour du milieu de pression mis sous pression du premier moteur vers le second ensemble de soupape (45).

6. Tête d'abattage-ébranchage selon l'une quelconque des revendications 1 à 5, dans l'option (i), le second ensemble de soupape (45) étant conçu pour régler la pression du milieu sous pression à un niveau prédéfini.

7. Tête d'abattage-ébranchage selon l'une quelconque des revendications 1 à 6, chaque moteur étant un moteur à piston radial qui comprend :
au moins un cylindre (60) ;
un ensemble de piston (61) conçu pour effectuer un mouvement de va-et-vient dans ledit cylindre ; et
un ensemble de segment de came (62) avec lequel l'ensemble de piston est en contact et qui commande le mouvement de l'ensemble de piston lorsque l'ensemble de piston se déplace le long de l'ensemble de segment de came ;
le second ensemble de soupape (45) étant conçu pour fournir ou transporter le milieu de pression au moteur à piston radial.

8. Tête d'abattage-ébranchage selon l'une quelconque des revendications 1 à 7,
les premier et deuxième moteurs (18, 20) étant reliés par une première conduite (22), par laquelle le milieu de pression est transféré d'un moteur à l'autre, et
le milieu de pression transporté dans l'espace entre les premier et deuxième moteurs (18, 20) étant transporté à la première conduite (22).

9. Tête d'abattage-ébranchage selon l'une quelconque des revendications 1 à 8,
les troisième et quatrième moteurs (19, 21) étant reliés par une seconde conduite (23), par laquelle le milieu de pression est transféré d'un moteur à l'autre, et
le milieu de pression pris de l'espace entre les troisième et quatrième moteurs (19, 21) étant pris de la seconde conduite (23) .

10. Procédé de commande d'une tête d'abattage-ébranchage comprenant un dispositif d'alimentation et un circuit de commande, le circuit de commande comprenant :
un premier moteur et un deuxième moteur (18, 20) qui sont conçus pour entraîner le dispositif d'alimentation (50) qui est conçu pour faire passer un tronc d'arbre à travers la tête d'abattage-ébranchage, le deuxième moteur étant accouplé en série avec le premier moteur ;
un troisième moteur et un quatrième moteur (19, 21) qui sont conçus pour entraîner le dispositif d'alimentation, le quatrième moteur étant accouplé en série avec le troisième moteur, et les troisième et quatrième moteurs étant accouplés en parallèle avec les premier et deuxième moteurs (18, 20) ;
un premier ensemble de soupape (11) qui est conçu pour commander la rotation des moteurs (18, 19, 20, 21) au moyen d'un milieu de pression mis sous pression, le premier ensemble de soupape (11) étant en outre conçu pour fournir un milieu de pression mis sous pression aux moteurs et pour recevoir un milieu de pression des moteurs, et le premier ensemble de soupape (11) étant également conçu pour démarrer et arrêter la rotation des moteurs et pour changer le sens de rotation des moteurs ; et
un second ensemble de soupape (45) ;
le procédé étant **caractérisé par** les étapes consistant à
soit (i), lorsque les moteurs ont été arrêtés au moyen du premier ensemble de soupape (11), fournir un milieu de pression mis sous pression à un espace entre le premier moteur et le deuxième moteur à partir d'une conduite (24) qui est connectée à une conduite sous pression (12) fournissant le milieu de pression mis sous pression ;
soit (ii), lorsque les moteurs ont été démarrés au moyen du premier ensemble de soupape (11) transporter le milieu de pression à un espace entre le premier moteur et le deuxième moteur depuis un espace entre le troisième moteur et le quatrième moteur ;
soit (iii) fonctionner selon les deux options (i) et (ii).
